(19) Europäisches Patentamt
European Patent Office
Office européen des brevets

(11) **EP 4 560 289 A1**

(12) **EUROPEAN PATENT APPLICATION**
published in accordance with Art. 153(4) EPC

(43) Date of publication:
**28.05.2025 Bulletin 2025/22**

(21) Application number: **23842807.2**

(22) Date of filing: **03.07.2023**

(51) International Patent Classification (IPC):
*G01N 15/02* $^{(2024.01)}$      *B01D 21/01* $^{(2006.01)}$
*B01D 21/30* $^{(2006.01)}$      *C02F 1/52* $^{(2023.01)}$
*C02F 1/56* $^{(2023.01)}$      *G01N 21/49* $^{(2006.01)}$

(52) Cooperative Patent Classification (CPC):
**B01D 21/01; B01D 21/30; C02F 1/52; C02F 1/56;
G01N 15/02; G01N 15/0205; G01N 21/49**

(86) International application number:
**PCT/JP2023/024621**

(87) International publication number:
**WO 2024/018882 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 JP 2022116996**

(71) Applicant: **Kurita Water Industries Ltd.
Tokyo 164-0001 (JP)**

(72) Inventors:
• **INOUE Ken
Tokyo 164-0001 (JP)**
• **SUZUKI Mizuki
Tokyo 164-0001 (JP)**
• **NAGAO Nobuaki
Tokyo 164-0001 (JP)**

(74) Representative: **Carpmaels & Ransford LLP
One Southampton Row
London WC1B 5HA (GB)**

(54) **AGGREGATION STATE DETERMINATION METHOD AND AGGREGATION PROCESSING METHOD**

(57)    Provided is a flocculation state determination method in which a liquid containing particles is irradiated with laser light and the flocculation state of the particles is determined on the basis of the light reception intensity of scattered light that results from the laser light being scattered by the particles, wherein the flocculation state of the particles is determined on the basis of the value of a change index that indicates a change in the light reception intensity.

FIG. 11

## Description

Technical Field

The present invention relates to a flocculation state determination method and a flocculation treatment method. The present application claims priority based on Japanese Patent Application No. 2022-116996 filed in Japan on July 22, 2022, the contents of which are incorporated herein by reference.

Related Art

In the case of performing flocculation treatment to remove turbidity and organic matter from various types of wastewater or water for use, inorganic flocculants such as iron chloride and polyaluminum chloride may be used in combination with polymeric flocculants. As a result, particles in the treated liquid flocculate, which facilitates the subsequent solid-liquid separation operation. Suppressing the addition amount of inorganic flocculants also makes it possible to reduce the amount of sludge generated.

In addition, in the case of dewatering sludge generated by biological treatment of wastewater, flocculation treatment using a combination of inorganic flocculants and polymeric flocculants may be performed prior to the dewatering treatment. This allows for efficient charge neutralization of the sludge and improves floc strength, making it possible to significantly reduce the water content of the sludge (dewatered cake) after dewatering treatment.

Flocculants need to be added in an appropriate amount according to the water quality of the treated liquid and the properties of the treated sludge. In the flocculation treatment of wastewater and water for use, if the addition amount (chemical dosage) of the flocculants is insufficient, the removal of turbidity and organic matter contained in the treated liquid becomes inadequate, resulting in deterioration of the water quality of the treated liquid. On the other hand, if the chemical dosage is excessive, the flocculants may leak to the subsequent stages, and potentially increase the load in subsequent treatment and cause contamination of the subsequent treatment devices.

Besides, in sludge treatment, if the chemical dosage is insufficient, charge neutralization of the sludge becomes inadequate, and what is more, the floc strength decreases, which may result in increased water content of the dewatered cake or leakage of sludge into the dewatering filtrate. Additionally, if the chemical dosage is excessive, the floc strength also decreases, which may lead to increased water content of the dewatered cake or leakage of sludge into the dewatering filtrate.

To determine the optimal chemical dosage, it is fundamental to conduct bench-scale tests such as jar tests, flocculation tests, filtration tests, and compression tests (Nutsche tests). Additionally, in the conventional operation management of dewatering equipment, the factors to be adjusted and the adjustment amounts when problems arise are determined by the operator's operational experience or decided by the confirmation results of dewatering effects (such as filterability, floc strength, and dewatered cake water content) obtained through the aforementioned bench-scale tests.

However, determination based on the operator's experience is qualitative, and therefore may require more time than expected to achieve situation improvement, or may even worsen the dewatering effects due to incorrect operations. Determination based on bench-scale tests, although quantitative, is difficult to evaluate continuously, and thus it takes time to reflect the results of bench-scale tests in changes to the operating conditions.

As a method to solve the aforementioned problems, Patent Literature 1 describes controlling flocculant addition using a flocculation state monitoring sensor that irradiates laser light toward the treated liquid and receives scattered light scattered by particles in the treated liquid to measure the flocculation state of the particles.

Related Art Literature

Patent Literature

[Patent Literature 1] Japanese Patent Application Laid-Open No. 2017-26438

SUMMARY OF INVENTION

Problems to be Solved by the Invention

According to the technology described in Patent Literature 1, it is stated that a flocculation index can be generated from the amplitude (change range) of the light reception signal intensity of scattered light obtained by a flocculation monitoring apparatus utilizing scattered light in the treated liquid, to estimate the particle diameter distribution state of flocculated particles. Additionally, according to the technology described in Patent Literature 1, it is stated that it is possible to evaluate the excess or deficiency of the flocculant addition amount and continuously adjust the flocculant addition amount. However, as a result of the inventors' study, it was found that the correlation between the flocculated floc particle diameter and the flocculation index generated from the amplitude of the light reception signal intensity is related to the physical measurement region of the flocculation monitoring apparatus utilizing scattered light in water, and the flocculation index may fluctuate. That is, the relationship between the required chemical dosage and the flocculation index becomes non-uniform, and the chemical dosage may be determined to be insufficient even in a state where the chemical dosage is excessive. In other words, the particle diameter may be determined to be small despite that the actual particle diameter is large. As a result, the control over the chemical dosage may become unstable, and a situation where an excessive amount of flocculant continues to be added may occur.

The present invention has been made in view of the above circumstances, and aims to provide a flocculation state determination method and a flocculation treatment method capable of determining the flocculation state of particles in the treated liquid over a wide range of particle diameters.

Means for Solving the Problems

The essence of the present invention is as follows.

[1] A flocculation state determination method according to the first aspect of the present invention is a method for irradiating laser light into a liquid containing particles and determining a flocculation state of the particles based on a light reception intensity of scattered light that results from the laser light being scattered by the particles, and the flocculation state determination method includes: determining the flocculation state of the particles based on a change index that represents a change in the light reception intensity.

[2] In the flocculation state determination method described in above [1], the change index may be a light reception amount change index CI expressed by formula (1),

[Formula 1]

$$CI = \frac{\frac{1}{n-1}\sum_{i=1}^{n}|S_i - S_{ave}|}{S_{ave}} \quad \cdots formula \ (1)$$

in the formula (1),

$S_i$: Integral value of the light reception intensity in an i-th floc formation state measurement time domain,
$S_{ave}$: Average value of integral values of the light reception intensity in the floc formation state measurement time domain when the light reception intensity is obtained n times in the floc formation state measurement time domain.

[3] In the flocculation state determination method described in above [1] or [2], the flocculation state may be determined to be good in a case where the change index is equal to or greater than a first threshold and is equal to or less than a second threshold, which is a value greater than the first threshold.

[4] In the flocculation state determination method described in any one of above [1] to [3], the flocculation state of the particles may be determined based on a relationship between a particle diameter of the particles and a change range of the light reception intensity, in addition to the change index.

[5] In the flocculation state determination method described in any one of above [1] to [4], a relationship between the change index and a particle diameter may be obtained in advance, and determination may be performed based on the change index in a particle diameter range decided based on the relationship.

[6] Furthermore, a flocculation treatment method according to another aspect of the present invention is a flocculation treatment method for adding a flocculant into a liquid containing particles and flocculating the particles, and the flocculation treatment method includes: a determination process of irradiating laser light into the liquid and determining a flocculation state of the particles based on a change index that represents a change in a light reception intensity of scattered light that results from the laser light being scattered by the particles; and a flocculant addition process of adding the flocculant in an addition amount based on the flocculation state of the particles determined in the determination process.

[7] In the flocculation treatment method described in above [6], the change index may be a light reception amount change index value CI expressed by formula (2),

[Formula 2]

$$CI = \frac{\frac{1}{n-1}\sum_{i=1}^{n}|S_i - S_{ave}|}{S_{ave}} \quad \cdots formula \ (2)$$

in the formula (2),

$S_i$: Integral value of the light reception intensity in an i-th floc formation state measurement time domain,
$S_{ave}$: Average value of integral values of the light reception intensity in the floc formation state measurement time domain when the light reception intensity is obtained n times in the floc formation state measurement time domain.

[8] In the flocculation treatment method described in above [6] or [7], the addition amount of the flocculant may be increased in a case where the change index is less than a first threshold, and the addition amount of the flocculant may be decreased in a case where the change index exceeds a second threshold, which is a value greater than the first threshold.

[9] In the flocculation treatment method described in above [8], a decrease in the addition amount of the flocculant may be stopped when the change index reaches a third threshold, which is a value greater than the first threshold and less than the second threshold, after exceeding the second threshold.

Effects of Invention

According to the above aspects of the present invention, it is possible to determine the flocculation state of particles in the treated liquid over a wide range of particle diameters.

BRIEF DESCRIPTION OF DRAWINGS

[FIG. 1] is a configuration diagram showing an example of the configuration of the flocculation treatment device to which the flocculation state determination method according to the first embodiment of the present invention can be applied.
[FIG. 2] is a configuration diagram showing an example of the configuration of the probe included in the flocculation state monitoring sensor.
[FIG. 3] is a schematic diagram of the measurement region of the flocculation state monitoring sensor.
[FIG. 4A] is a diagram showing an example of the detection waveform obtained by the flocculation state monitoring sensor.
[FIG. 4B] is a diagram showing an example of the detection waveform obtained by the flocculation state monitoring sensor.
[FIG. 5] is a diagram for illustrating the device used to examine the relationship between particle diameter and light reception intensity change range.
[FIG. 6] is a graph showing the relationship between particle diameter and large peak occurrence rate.
[FIG. 7] is a diagram for illustrating the considerations of the inventors of the present invention.
[FIG. 8] is a diagram for illustrating the considerations of the inventors of the present invention.
[FIG. 9] is a diagram for illustrating the passing pattern and scattering direction of scattered light when particles having a particle diameter larger than the diameter of the measurement region A pass through the measurement region A.
[FIG. 10] is a diagram for illustrating the area of a detection waveform figure showing the time-dependent change of the light reception intensity.
[FIG. 11] is a graph showing an example of the relationship between particle diameter and light reception amount change index $CI_{(3)}$.
[FIG. 12] is a flowchart showing the flow of the flocculation treatment method according to the second embodiment of the present invention.
[FIG. 13A] is a graph showing the time-dependent change of the chemical dosing output of the polymeric flocculant in the example.
[FIG. 13B] is a graph showing the time-dependent change of the light reception amount change index $CI_{(3)}$.

DESCRIPTION OF EMBODIMENTS

<<Configuration Example of Flocculation Treatment Device>>

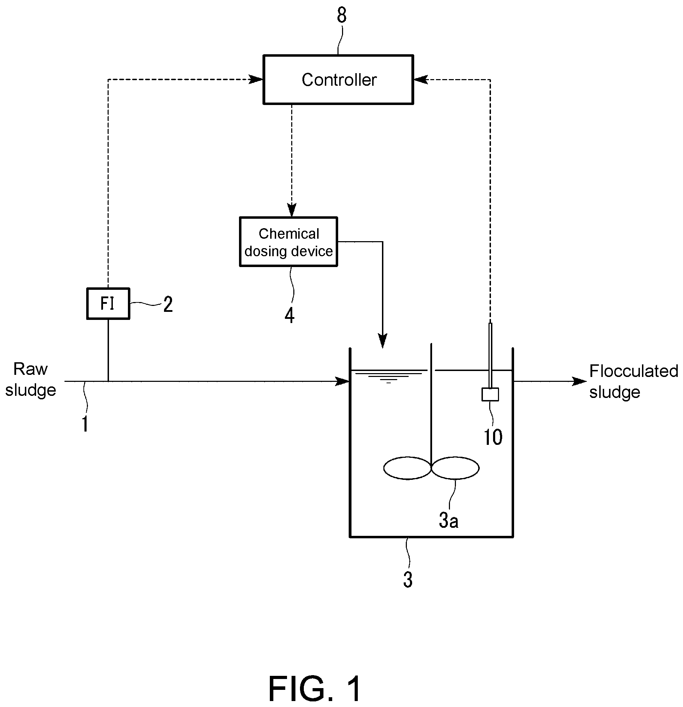

First, an example of a flocculation treatment device to which the flocculation state determination method according to an embodiment of the present invention can be applied will be described. FIG. 1 is a configuration diagram showing an example of the flocculation treatment device to which the flocculation state determination method according to this embodiment can be applied.

As shown in FIG. 1, in this flocculation treatment device, a treated liquid is introduced into a treatment tank 3 via an inlet pipe 1 having a flow meter 2, and a flocculant is added to the treatment tank 3 by a chemical dosing device 4. The treatment tank 3 is equipped with a stirrer 3a and a flocculation state monitoring sensor 10, and a detection signal generated by the flocculation state monitoring sensor 10 is input to a controller 8. The controller 8 controls the chemical dosing device 4 based on this detection signal.

The flocculant may be an inorganic flocculant, an organic flocculant, or a combination thereof.

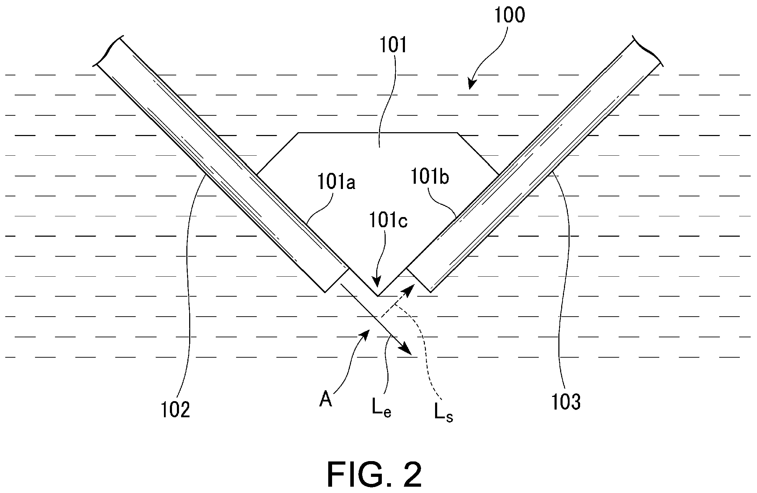

Preferably, the flocculation state monitoring sensor 10 uses the one described in Patent Literature 1. The flocculation state monitoring sensor 10 includes a probe 100. FIG. 2 shows the configuration of the probe 100 included in the flocculation state monitoring sensor 10. This probe 100 includes a block 101 having mutually perpendicular surfaces 101a and 101b and a top part 101c where the surfaces 101a and 101b intersect, a light-emitting part 102 provided along the surface 101a to irradiate laser light toward the treated liquid, and a light-receiving part 103 provided along the surface 101b with a light reception optical axis perpendicular to a light emission optical axis of the light-emitting part 102. In addition, the flocculation state monitoring sensor 10 includes a light emission circuit, a detection circuit, and a measurement circuit (not shown) to perform the light emission operation of the light-emitting part 102 and analysis of the light reception signal of the light-receiving part 103. The measurement circuit includes a timing circuit, an A/D conversion part, an arithmetic part, etc.

Similar to Patent Literature 1, in the probe 100, the laser light irradiated from the light-emitting part 102 to the measurement region A near the top part 101c is scattered by particles in the measurement region A. This scattered light is received by the light-receiving part 103, and the flocculation state is measured based on the time-dependent change of the intensity of the scattered light received by the light-receiving part 103. The block 101 is made of an opaque material. The diameter of the measurement region A in a cross-section perpendicular to the optical axis of the laser light L, in other words, the diameter of the laser light L, is, for example, 1 mm. As will be described later, the diameter of the measurement region A is a threshold at which the correlation between the particle diameter and the change range of the light reception intensity, which is the intensity of the scattered light received by the light-receiving part 103, is reversed. Therefore, to appropriately determine the required flocculation state, the diameter of the measurement region A may be changed as appropriate.

In response to the signal from the timing circuit, the light emission circuit transmits an electrical signal with a constant modulation frequency relative to the light-emitting part to the light-emitting part 102. The light-emitting part 102 emits laser light according to the signal from the light emission circuit. The light-receiving part 103 receives the scattered light generated when the laser light hits the particles contained in the treated water, and converts the scattered light into an electrical signal. The detection circuit removes the modulation component included in the electrical signal from the light-receiving part 103, and outputs a light reception voltage corresponding to the light reception intensity.

The measurement circuit transmits a signal (specific frequency modulated wave) for light emission to the light emission circuit, as well as converts the signal from the detection circuit into a digital signal, performs logical operations, and outputs information related to flocculation.

The monitoring apparatus of Patent Literature 1, especially the monitoring apparatus described in Japanese Patent No. 6281534, which was patented, can be preferably used as the flocculation state monitoring sensor 10, but the present invention is not limited thereto.

The flocculation monitoring apparatus of Japanese Patent No. 6281534 is:
"a flocculation monitoring apparatus monitoring a treatment state of water to be treated that is subjected to a flocculation treatment, the apparatus comprising:

  a measurement-light applying part applying a measurement light to a measurement region in the water to be treated;
  a scattered-light receiving part receiving a scattered light due to particles of the water to be treated in the measurement region; and
  a measurement value arithmetic part including an amplitude measuring means measuring an amplitude of a light reception signal obtained by the scattered-light receiving part, the measurement value arithmetic part calculating an occurrence rate or occurrence frequency of a specific amplitude by monitoring and aggregating an appearance of the measured amplitude, the measurement value arithmetic part calculating an index related to flocculation of the water to be treated, the index related to the flocculation indicating a particle diameter of flocs in the water to be treated, wherein the amplitude measuring means detects first inflection points at which the light reception signal changes from rising to falling and second inflection points at which the light reception signal changes from falling to rising, and measures the amplitude from a level difference between the first inflection points and the second inflection points."

Up to this point, an example of the flocculation treatment device to which the flocculation state determination method according to this embodiment can be applied has been described.

<<Flocculation State Determination Method>>

Next, the flocculation state determination method according to the first embodiment of the present invention will be described. The flocculation state determination method according to this embodiment is a method for irradiating laser light into a liquid containing particles and determining the flocculation state of the particles based on the light reception intensity of scattered light that results from the laser light being scattered by the particles, and the method includes determining the flocculation state of the particles based on the value of a change index that represents a change in the light reception intensity.

The flocculation state determination method according to this embodiment is a method for irradiating laser light into a liquid containing particles and determining the flocculation state of the particles based on the light reception intensity of scattered light that results from the laser light being scattered by the particles. The irradiation of laser light, reception of scattered light, and calculation of light reception intensity can be performed by using known methods, and for example, the flocculation state monitoring sensor 10 provided in the aforementioned flocculation treatment device may be used. In the following, the flocculation state determination method will be described with use of the flocculation state monitoring sensor 10 as an example.

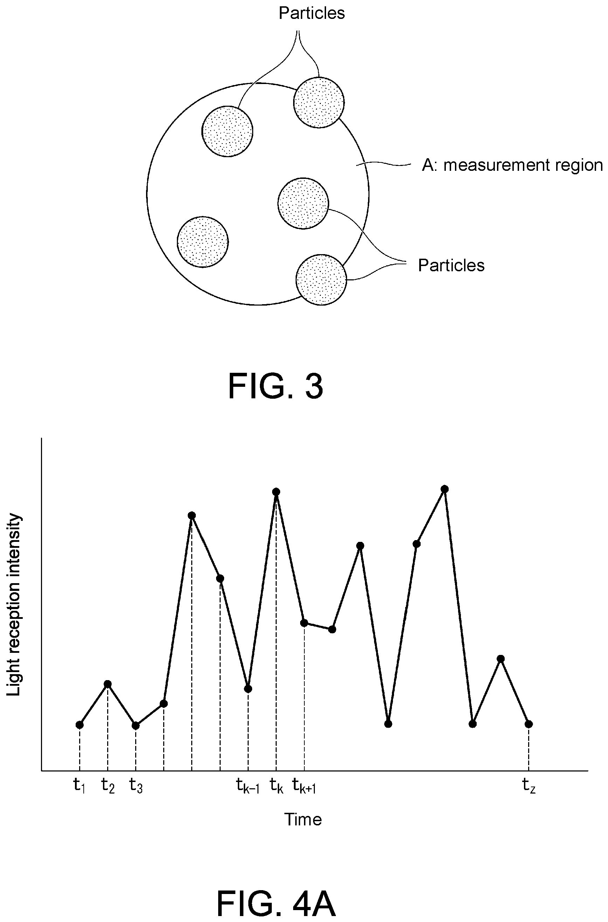

In this embodiment, the light reception intensity is obtained by the flocculation state monitoring sensor 10. As shown in FIG. 3, at a certain time point, for example, 5 particles exist in the measurement region A. As shown in FIG. 2, at this time point, the laser light $L_e$ irradiated to the measurement region A is scattered by each particle, and the scattered light $L_s$ enters the light-receiving part 103. At a time point when a predetermined time $\Delta t$ has elapsed from this time point, the number of particles existing in the measurement region A fluctuates. Theoretically, the number of particles may not change, but since the particles undergo Brownian motion and the treated liquid in the treatment tank 3 is being stirred, the number of particles usually fluctuates. The predetermined time $\Delta t$ is preferably a time selected from 0.1 mSec to 10 mSec, for example, about 1 mSec.

As the number of particles fluctuates, the scattered light intensity fluctuates accordingly, and the light reception intensity of the scattered light received by the light-receiving part 103 varies.

In the case where the particle diameter is smaller than or equal to the diameter of the measurement region A, the larger the particle diameter, the greater the light reception intensity change range when a single particle enters or exits the measurement region A. Therefore, the size of the particle diameter of the particle that enters or exits the measurement region A can be detected from this light reception intensity change range. That is, the difference between the light reception intensity at arbitrary time $t_k$ and the light reception intensity at time $t_{k+1}$ after $\Delta t$ has elapsed is a value proportional to the surface area of the particle that enters or exits the measurement region A during this $\Delta t$.

FIG. 4A shows an example of the time-dependent change of the light reception intensity. The output signal in FIG. 4A is the light reception intensity of the light-receiving part 103, and the unit is, for example, mV.

FIG. 4A is a graph plotting the light reception intensity measured at each of times $t_1$, $t_2$...$t_z$, and the interval $\Delta t$ between the times (that is, $t_k$-$t_{k-1}$) is, as mentioned above, preferably 0.1 mSec to 10 mSec, for example, 1 mSec.

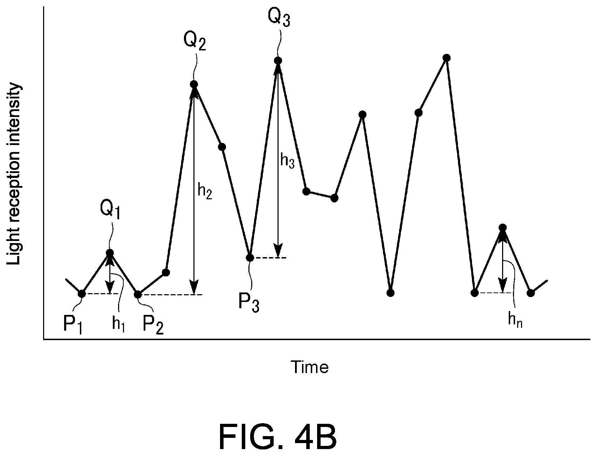

FIG. 4B is an explanatory diagram in which the minimum points $P_1$, $P_2$... and the maximum points $Q_1$, $Q_2$... in FIG. 4A are noted, and the light reception intensity change range, that is, the differences $h_1$, $h_2$... between the minimum points and the maximum points, are noted. Hereinafter, the number of maximum points may be referred to as the number of peaks.

As mentioned above, the difference $h_k$ between the light reception intensity at arbitrary time $t_{k-1}$ and the light reception intensity at time $t_k$ is a value proportional to the surface area of the particle that enters or exits the measurement region A between time $t_{k-1}$ and time $t_k$.

From all the light reception intensity change ranges $h_1$, $h_2$...$h_n$ during the $\Delta t \times z$ seconds from time $t_1$ to time $t_z$, the particle diameter distribution of the particles existing near the measurement region A between time $t_1$ and time $t_z$ is detected. For example, z is set to 200, and in the case where $\Delta t$ = 1 mSec, $\Delta t \times z$ becomes 0.2 seconds. However, this is merely an example, and $\Delta t \times z$ may be approximately 0.01 seconds to 900 seconds.

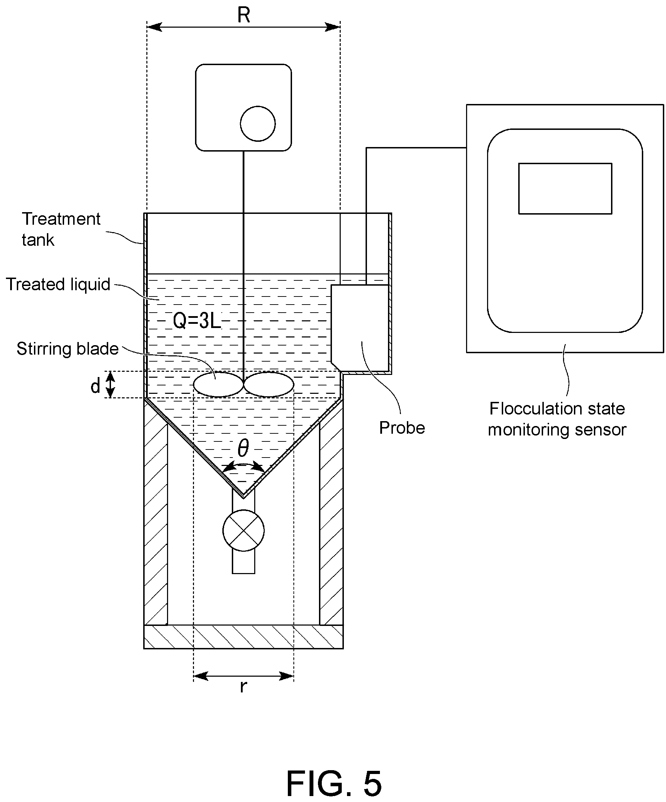

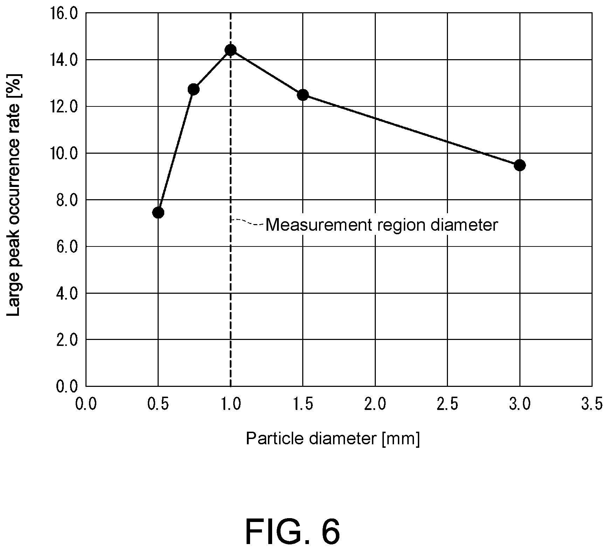

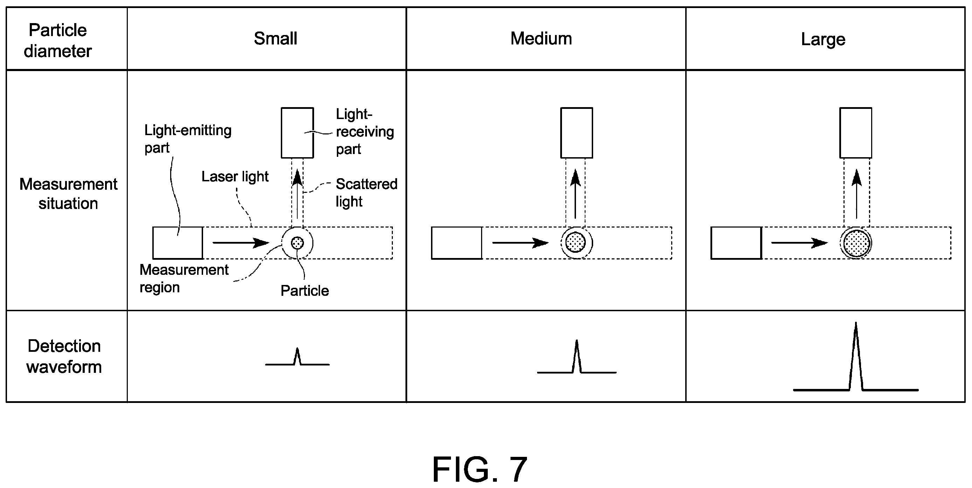

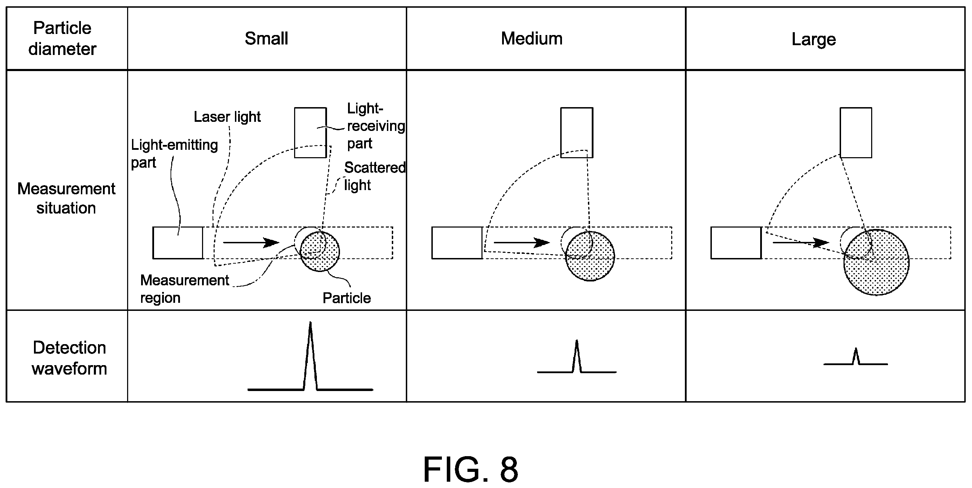

Here, the relationship between particle diameter and light reception intensity change range will be described with reference to FIG. 5 to FIG. 8. The inventors of the present invention conducted study on the relationship between particle diameter and light reception intensity change range. FIG. 5 is a diagram for illustrating the device used to examine the relationship between particle diameter and light reception intensity change range, and FIG. 6 is a graph showing the relationship between particle diameter and large peak occurrence rate obtained from the study of the relationship between particle diameter and light reception intensity change range. The large peak occurrence rate refers to the occurrence rate of peaks with a light reception intensity change range of 4000 mV or more relative to the total number of peaks. FIG. 7 and FIG. 8 are diagrams for illustrating the considerations of the inventors of the present invention.

A simulated treated liquid was prepared by dispersing black artificial particles in water to achieve a concentration of 1.0% by weight on a dry weight basis. The artificial particles were manufactured by adding and gelling a sodium alginate solution containing 1% by mass of paint in a 1% by mass of calcium chloride solution through a tube with a syringe at the tip. The addition rate of the sodium alginate solution was adjusted using a Smooth Flow Pump manufactured by TACMINA Corporation. Artificial particles with sizes ranging from 0.5 $\mu$m to 3.0 $\mu$m were manufactured by changing the concentration of the sodium alginate solution, the addition rate, and the syringe shape.

As shown in FIG. 5, a treatment tank with an inner diameter R of 154 mm and a taper angle $\theta$ of 90° at the bottom when viewed from the front was used. A pitched paddle type stirring blade with four blade plates inclined at 45° from the horizontal plane was used for stirring the simulated treated liquid. The diameter r of the stirring blade (the distance r between the tips of the blade plates passing through the center of rotation) was 75 mm, and the distance between the upper end and the lower end of each blade plate was 10 mm. This stirring blade was placed at the center of the treatment tank, with the distance d from the upper end of the taper to the upper end of each blade plate being 45 mm.

A flocculation state monitoring sensor (S. sensing CS-P manufactured by Kurita Water Industries Ltd.) was placed above the stirring blade, and 3 L of the treated liquid was supplied to the treatment tank. The diameter of the measurement region of the probe provided in the flocculation state monitoring sensor was 1 mm. Then, with a stirring speed of 300 rpm and an analysis time of 3 minutes, the light reception intensity was measured, and the large peak occurrence rate for each particle diameter of the artificial particles was calculated. The duty ratio of the irradiated laser light was set to 10% (light emission time 200 mSec, pause time 1800 mSec). The results are shown in FIG. 6.

As shown in FIG. 6, it was found that in the case where the particle diameter is smaller than the diameter of the measurement region, the large peak occurrence rate increases with increasing particle diameter; and in the case where the particle diameter is larger than the diameter of the measurement region, the large peak occurrence rate decreases with increasing particle diameter.

The inventors of the present invention have considered the above study results as follows. As shown in FIG. 7, in the case where the diameter of the particle passing through the measurement region A is smaller than the diameter of the measurement region A, as the particle diameter increases, the projected area of the laser light becomes larger, resulting in a larger change in the amount of scattered light. Therefore, the change in the amount of light received by the light-receiving part 103, which is the amount of scattered light received, also increases. On the other hand, as shown in FIG. 8, in the case where the diameter of the particle passing through the measurement region A is larger than the diameter of the measurement region, as the particle diameter increases, the curvature of the particle surface decreases and results in a smaller scattering angle of the scattered light, and the scattered light reaching the light-receiving part 103 decreases, resulting in a smaller change in the amount of scattered light. Therefore, the change in the amount of light received decreases. Based on this, the correlation between the particle diameter of particles passing through the measurement region A and the light reception intensity change range reverses at the boundary of the measurement region diameter.

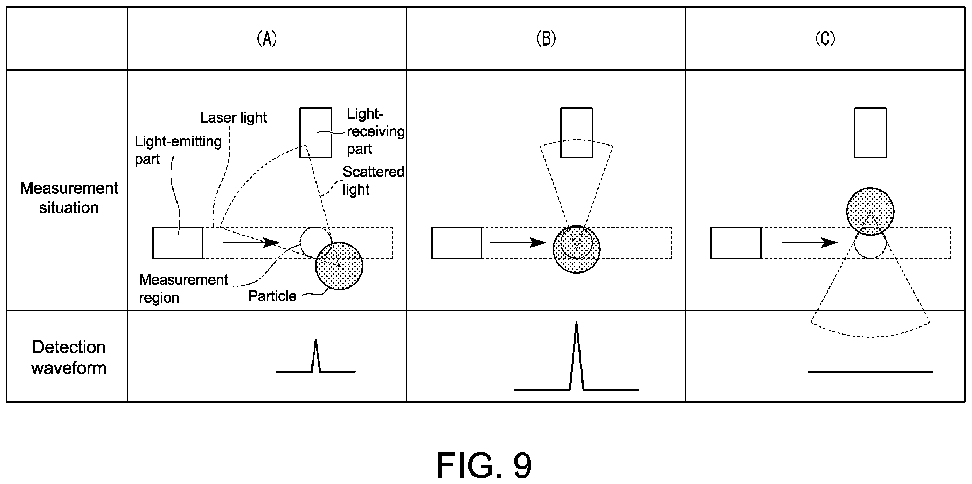

In addition, FIG. 9 shows a diagram for illustrating the passing pattern and scattering direction of scattered light when particles having a particle diameter larger than the diameter of the measurement region A pass through the measurement region A. As shown in (A) of FIG. 9, in the case where a part of the particle passes through the portion on the side opposite to the light-receiving part 103 in the measurement region A, the angle between the direction of the laser light irradiated from the light-emitting part 102 and the scattering direction of the scattered light is small, so the amount of scattered light received by the light-receiving part 103 decreases. As a result, the light reception intensity generated by the light-receiving part 103 decreases. In other words, the peak height of the detection waveform becomes lower.

As shown in (B) of FIG. 9, in the case where the particle passes through the entire measurement region A, the scattered light becomes more likely to be directed toward the light-receiving part 103, so the amount of scattered light received by the light-receiving part 103 increases. As a result, the light reception intensity generated by the light-receiving part 103 increases. In other words, the peak height of the detection waveform becomes higher.

As shown in (C) of FIG. 9, in the case where a part of the particle passes through the portion on the side of the light-receiving part 103 in the measurement region A, the scattered light is directed in the opposite direction to the light-receiving part 103, so the light-receiving part 103 does not receive the scattered light. As a result, the detection waveform does not show a peak.

Thus, it is considered that the detection waveform varies because the projected area of the laser light and the scattering direction of the scattered light change depending on the passing pattern when particles pass through the measurement region A.

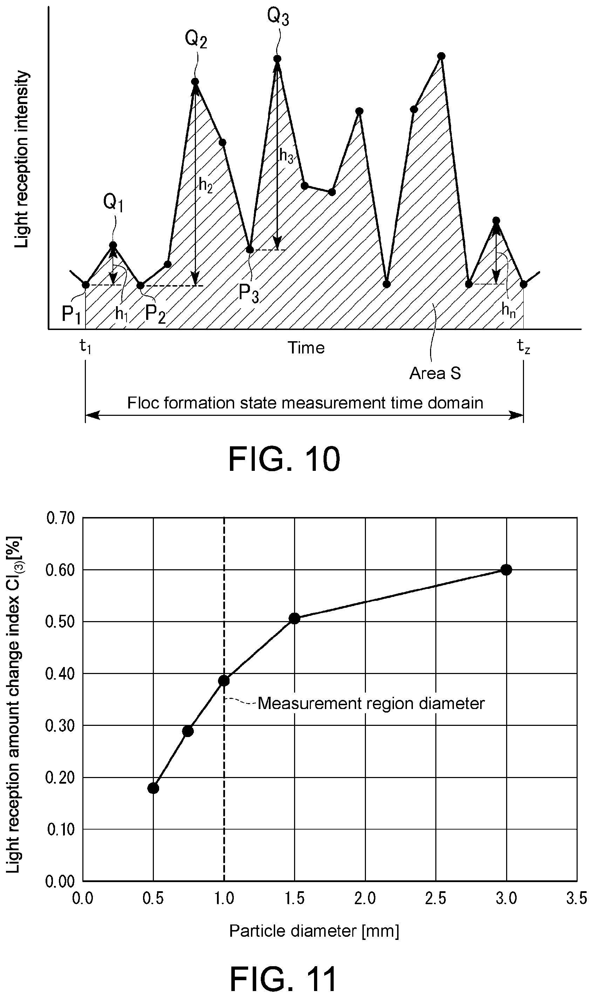

The inventors of the present invention, through further diligent study, discovered an index "light reception amount change index $CI_{(3)}$" that can grasp the size of particle diameter even when the particle diameter changes around the diameter of the measurement region. The light reception amount change index $CI_{(3)}$ is a statistical value obtained by dividing the unbiased absolute deviation of each integral value (area $S_i$) of the light reception intensity when the floc formation state measurement time domain is obtained n times by the average value $S_{ave}$ of $S_1$ to $S_n$, and is expressed by the following formula (3). The integral value of the light reception intensity corresponds to the area indicated by the hatched region in FIG. 10. The floc formation state measurement time domain refers to the time per irradiation of the laser to the measurement region A (light emission time of 1 pulse).

[Formula 3]

$$CI_{(3)} = \frac{\frac{1}{n-1}\sum_{i=1}^{n}|S_i - S_{ave}|}{S_{ave}} \qquad \cdots formula \ (3)$$

FIG. 11 shows the relationship between the light reception amount change index $CI_{(3)}$ and the particle diameter calculated from the data obtained in the study that yielded the results in FIG. 6. FIG. 11 is a graph showing an example of the relationship between the particle diameter and the light reception amount change index $CI_{(3)}$. As shown in FIG. 11, it was found that the larger the particle diameter, the greater the light reception amount change index $CI_{(3)}$.

Therefore, by using the above-mentioned light reception amount change index $CI_{(3)}$, it is possible to determine the flocculation state in the treated liquid. Specifically, as shown in Table 1, it is determined that the greater the light reception amount change index $CI_{(3)}$, the larger the particle diameter.

[Table 1]

| Particle diameter | Flocculation index | Particle size determination |
|---|---|---|
| | Light reception amount change index $CI_{(3)}$ | |
| Small | Small | Small |
| ↑ | ↓ | ↓ |
| Diameter of measurement region | Medium | Medium |
| ↓ | ↓ | ↓ |
| Large | Large | Large |

As described above, it is possible to determine the flocculation state of particles based on the correlation between the particle diameter and the light reception intensity change range. In the following, examples of the flocculation state determination method will be described in more detail.

The determination of the flocculation state may be performed, for example, by the following method. For instance, if the light reception amount change index $CI_{(3)}$ is equal to or greater than a predetermined first threshold and equal to or less than a second threshold greater than the first threshold, the flocculation state is determined to be good. If the light reception amount change index $CI_{(3)}$ is less than the first threshold, it can be determined that the flocculation is insufficient and the particle diameter is too small; and if the light reception amount change index $CI_{(3)}$ exceeds the second threshold, it can be determined that the particle diameter is too large.

To obtain the first threshold and the second threshold, for example, flocculation treatment is performed on the treated liquid for a predetermined period (for example, about 1 week to 1 month) using the flocculation treatment device. During this time, the chemical dosage is adjusted while observing the flocculation condition, and the time-dependent change of the light reception intensity of the flocculation state monitoring sensor is recorded. Then, during this period, the light reception amount change index $CI_{(3)}$ when the particle diameter reaches the lower limit of the appropriate range is set as the first threshold, and the light reception amount change index $CI_{(3)}$ when the particle diameter reaches the upper limit of the appropriate range is set as the second threshold.

<<First Modification Example of Flocculation State Determination Method>>

While the above-described flocculation state determination method is a flocculation treatment method including determination based solely on the light reception amount change index $CI_{(3)}$, the flocculation treatment method according to this embodiment preferably performs determination based on the light reception intensity change range of scattered light in addition to the light reception amount change index $CI_{(3)}$. In the range where the particle diameter is small, the light reception intensity change range can more accurately grasp the change in particle diameter than the light reception amount change coefficient. Therefore, by performing determination based on the light reception intensity change range of scattered light in addition to the light reception amount change index $CI_{(3)}$, the flocculation state can be determined more accurately. The determination based on the light reception intensity change range of scattered light refers to, for example, determination of the flocculation state using the relationship between particle diameter and light reception intensity change range described above.

<<Second Modification Example of Flocculation State Determination Method>>

Additionally, the relationship between the light reception amount change index $CI_{(3)}$ and the particle diameter may be obtained in advance, and determination based on the light reception amount change index $CI_{(3)}$ may be performed within a particle diameter range determined based on this relationship. Therefore, the flocculation state can be grasped accurately without complicating the determination within the specified particle diameter range.

<<Third Modification Example of Flocculation State Determination Method>>

While the above-described flocculation state determination method is a flocculation treatment method with the first threshold and the second threshold set, the flocculation treatment method according to this embodiment may be a flocculation treatment method with only either the first threshold or the second threshold set. In such a case, determination based on the light reception intensity change range of scattered light as described above may be performed in addition to the determination based on the light reception amount change index $CI_{(3)}$.

Normally, the particle concentration in the treated liquid supplied during flocculation treatment does not show significant fluctuations, but there may be cases where the particle concentration temporarily fluctuates. For example, in the case where the particle concentration in the treated liquid temporarily decreases, the amount of flocculant per particle concentration increases. At this time, it becomes easier for the particle diameter to become larger than before the decrease in particle concentration. In the case where determination is performed based on the light reception intensity change range of scattered light, if the particle diameter becomes larger than the diameter of the measurement region, the light reception intensity change range becomes smaller. Therefore, determination based solely on the light reception intensity change range may be insufficient for accurate determination of the flocculation state. However, since the particle diameter and the light reception amount change coefficient have a positive correlation over a wide range, performing determination based on the light reception amount change index $CI_{(3)}$ with a set second threshold in addition to the determination based on the light reception intensity change range makes it possible to accurately determine the flocculation state.

In flocculation treatment where it is not expected for the particle diameter to become larger than the diameter of the measurement region, determination based on the light reception amount change index $CI_{(3)}$ with a set first threshold can be performed to prevent insufficient flocculation.

<<Flocculation Treatment Method>>

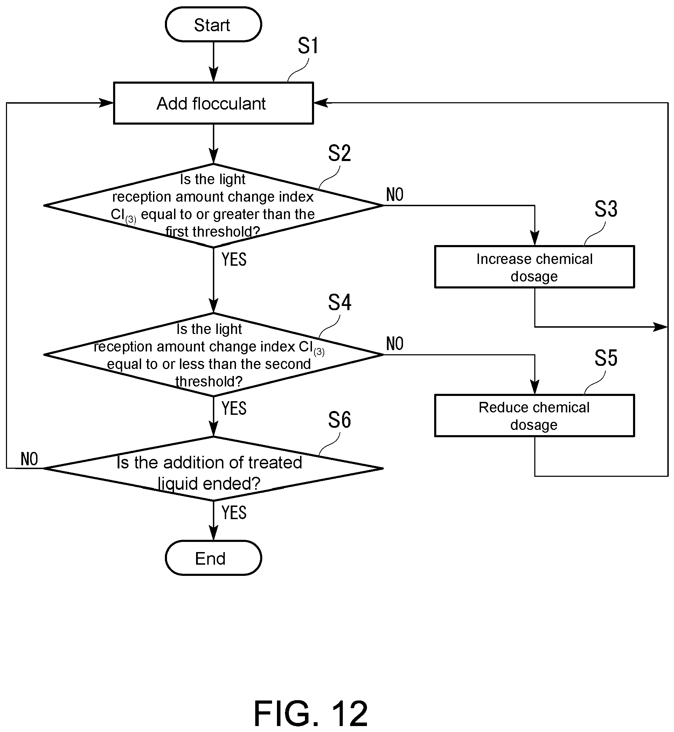

Next, the flocculation treatment method according to the second embodiment of the present invention will be described. The flocculation treatment method according to this embodiment is a flocculation treatment method for adding a flocculant into a liquid containing particles and flocculating particles, and includes a determination process of irradiating laser light into the liquid and determining the flocculation state of the particles based on the light reception amount change index $CI_{(3)}$ calculated from formula (3) using the light reception intensity of scattered light that results from the laser light being scattered by the particles; and a flocculant addition process of adding the flocculant in an addition amount based on the flocculation state of the particles determined in the determination process. An example of the specific flow of the flocculation treatment method according to this embodiment will be described below with reference to FIG. 12. FIG. 12 is a flowchart showing the flow of the flocculation treatment method according to this embodiment.

First, the flocculant is started to be supplied to the treatment tank where the treated liquid is being stirred (Step S1). At this time, the treated liquid is continuously supplied to the treatment tank.

Next, the light reception intensity is continuously calculated, the light reception amount change index $CI_{(3)}$ is calculated from the calculated light reception intensity, and it is determined whether the light reception amount change index $CI_{(3)}$ is equal to or greater than the first threshold (Step S2).

In the case where the light reception amount change index $CI_{(3)}$ is less than the first threshold (Step S2/NO), the chemical dosage (chemical dosing rate) is increased (Step S3). To increase the chemical dosage, the output of the chemical dosing device (pump stroke, pump pulse, rotation speed, etc.) is raised. After that, the addition of the flocculant is continued with the increased chemical dosage. In other words, the steps following Step S1 are implemented. On the other hand, in the case where the light reception amount change index $CI_{(3)}$ is equal to or greater than the first threshold (Step S2/YES), it is determined whether the light reception amount change index $CI_{(3)}$ is equal to or less than the second threshold (Step S4).

In the case where the light reception amount change index $CI_{(3)}$ exceeds the second threshold (Step S4/NO), the chemical dosing device 4 reduces the chemical dosage (chemical dosing rate) (Step S5). To reduce the chemical dosage, the output of the chemical dosing device is lowered. After that, the addition of the flocculant is continued with the reduced chemical dosage. In other words, the steps following Step S1 are implemented.

In the case where the light reception amount change index $CI_{(3)}$ is equal to or less than the second threshold (Step S4/YES), it is determined whether the addition of the treated liquid has ended (Step S6). In the case where the addition of the treated liquid has ended (Step S6/YES), the addition of the flocculant is terminated and the flocculation treatment is completed. On the other hand, in the case where the addition of the treated liquid is continuing (Step S6/NO), the addition of the flocculant is continued without changing the chemical dosing rate, and the steps following Step S1 are repeated sequentially.

<<Modification Example of Flocculation Treatment Method>>

In the flocculation treatment method according to this embodiment, it is preferable to stop decreasing the chemical dosage when the light reception amount change index $CI_{(3)}$ reaches a third threshold, which is greater than the first threshold and less than the second threshold, after exceeding the second threshold. If the decrease in chemical dosage is stopped when the light reception amount change index $CI_{(3)}$ has decreased from the second threshold to the first threshold, the chemical dosage may become insufficient, resulting in inadequate particle flocculation. However, by stopping decreasing the chemical dosage when the light reception amount change index $CI_{(3)}$ reaches the third threshold, which is a value greater than the first threshold and less than the second threshold, after exceeding the second threshold, the chemical dosage does not become insufficient, and flocculation can be continued.

Although the present invention has been described above based on the embodiments of the present invention, the present invention is not limited to these. The above descriptions are merely examples, and any configuration that has a substantially identical technical concept to that described in the claims of the present invention and produces similar effects is included in the technical scope of the present invention.

For example, the flocculation treatment device described above is merely an example. In FIG. 1, the controller 8 and the flocculation state monitoring sensor 10 are installed separately. However, it is also possible to incorporate the control program of the controller 8 into a signal processing unit of the flocculation state monitoring sensor 10, and configure the flocculation state monitoring sensor 10 to provide a control signal to the chemical dosing device 4.

In addition, the flocculation state monitoring sensor 10 may be installed on a flocculated liquid outflow pipe from the treatment tank 3. Furthermore, a measurement tank may be provided, into which the liquid in the treatment tank 3 is introduced, and the flocculation state monitoring sensor 10 may be installed in this measurement tank.

Moreover, in the probe described above, the light-emitting part 102 and the light-receiving part 103 are perpendicular to each other. However, the present invention is not limited thereto, and the light-emitting part 102 and the light-receiving part 103 may be arranged at other angles to each other. The angle between the light-emitting part 102 and the light-receiving part 103 can be, for example, 10° to 170°.

In addition, the usage time of the light-emitting element can be extended by repeating light emission and non-emission at predetermined time intervals. For example, in the case where the light emission time is set to 0.2 seconds per cycle and the light emission interval is set to 2 seconds, it is possible to extend the usage time (lifespan) of the light-emitting element to 10 times longer compared to continuous light emission.

Furthermore, the example of the flocculant addition process described above is merely an example. It suffices if the flocculant is added based on the flocculation state determined by the flocculation state determination method according to the present invention.

<<Other Modification Examples>>

In the flocculation state determination method and the flocculation treatment method described above, the light reception amount change index $CI_{(3)}$ expressed by the above formula (3) is used as the change index. Nevertheless, the light reception amount change indexes $CI_{(4)}$ to $CI_{(8)}$ expressed by the following formulas (4) to (8) may also be used.

The light reception amount change index $CI_{(4)}$ is a statistical value obtained by dividing the unbiased standard deviation of each integral value (area $S_i$) of the light reception intensity when the floc formation state measurement time domain is obtained n times by the average value $S_{ave}$ of $S_1$ to $S_n$, and is expressed by the following formula (4).

[Formula 4]

$$CI_{(4)} = \frac{\sqrt{\frac{1}{n-1}\sum_{i=1}^{n}(S_i - S_{ave})^2}}{S_{ave}} \quad \cdots formula \ (4)$$

The light reception amount change index $CI_{(5)}$ is a statistical value obtained by dividing the absolute deviation of each integral value (area $S_i$) of the light reception intensity when the floc formation state measurement time domain is obtained n times by the average value $S_{ave}$ of $S_1$ to $S_n$, and is expressed by the following formula (5).

[Formula 5]

$$CI_{(5)} = \frac{\frac{1}{n}\sum_{i=1}^{n}|S_i - S_{ave}|}{S_{ave}} \qquad \cdots formula \ (5)$$

The light reception amount change index $CI_{(6)}$ is a statistical value obtained by dividing the standard deviation of each integral value (area $S_i$) of the light reception intensity when the floc formation state measurement time domain is obtained n times by the average value $S_{ave}$ of $S_1$ to $S_n$, and is expressed by the following formula (6).
[Formula 6]

$$CI_{(6)} = \frac{\sqrt{\frac{1}{n}\sum_{i=1}^{n}(S_i - S_{ave})^2}}{S_{ave}} \qquad \cdots formula \ (6)$$

In the above formulas (4) to (6),

$S_i$: Integral value of the light reception intensity in the i-th floc formation state measurement time domain

$S_{ave}$: Average value of the integral values of the light reception intensity in the floc formation state measurement time domain when the light reception intensity is obtained n times in the floc formation state measurement time domain.

The light reception amount change index $CI_{(7)}$ is a statistical value obtained by dividing the median absolute deviation of each integral value (area $S_i$) of the light reception intensity when the floc formation state measurement time domain is obtained n times by the median value $S_{50pereentile}$, and is expressed by the following formula (7).
[Formula 7]

$$CI_{(7)} = \frac{\frac{1}{n}\sum_{i=1}^{n}|S_i - S_{50percentile}|}{S_{50percentile}} \qquad \cdots formula \ (7)$$

The light reception amount change index $CI_{(8)}$ is a statistical value obtained by dividing the median standard deviation of each integral value (area $S_i$) of the light reception intensity when the floc formation state measurement time domain is obtained n times by the median value $S_{50percentile}$, and is expressed by the following formula (8).
[Formula 8]

$$CI_{(8)} = \frac{\sqrt{\frac{1}{n}\sum_{i=1}^{n}(S_i - S_{50percentile})^2}}{S_{50percentile}} \qquad \cdots formula \ (8)$$

In the above formulas (7) to (8),

$S_i$: Integral value of the light reception intensity in the i-th floc formation state measurement time domain
$S_{50percentile}$: Median value (50 percentile value) of the integral value of the light reception intensity in the floc formation state measurement time domain when the light reception intensity is obtained n times in the floc formation state measurement time domain.

Moreover, for the change index, as long as a correlation with the particle diameter can be obtained, the reference points ($S_{ave}$, $S_{50percentile}$) in the above formulas (3) to (8) may be changed to the first quartile, median value, third quartile, maximum value, or any other percentile. Additionally, statistical values obtained by multiplying arbitrary coefficients to the above formulas (3) to (8), statistical values calculated without division by the average or median value, or statistical values obtained by multiplying at least one of the numerator and denominator by its value may also be used.

**Example**

The following shows examples of the present invention, but the conditions in the examples are one example of conditions adopted to confirm the feasibility and effects of the present invention, and the present invention is not limited to the conditions used in the following examples. The present invention can adopt various conditions as long as it does not deviate from the gist of the present invention and achieves the purpose of the present invention.

<Example 1>

A comparison of the correlation relationships between multiple change indexes and particle diameter was performed.

A simulated treated liquid was prepared by dispersing black artificial particles in water to achieve a concentration of 1.0% by weight on a dry weight basis. The artificial particles were manufactured by adding and gelling a sodium alginate solution containing 1% by mass of paint in a 1% by mass of calcium chloride solution through a tube with a syringe at the tip. The addition rate of the sodium alginate solution was adjusted using a Smooth Flow Pump manufactured by TACMINA Corporation. Artificial particles with average particle diameters and weight ratios for each particle diameter as shown in Table 2 were manufactured by changing the concentration of the sodium alginate solution, the addition rate, and the syringe shape. In this manner, simulated treated liquids containing the respective artificial particles were prepared for condition Nos. 1 to 8.

[Table 2]

| Condition | Average particle diameter | Weight ratio for each particle diameter [%] | | | | | |
|---|---|---|---|---|---|---|---|
| No. | [mm] | 0.6 mm | 0.9 mm | 1.3 mm | 1.9 mm | 3.8 mm | 5.5 mm |
| 1 | 1.1 | 36.3 | 27.3 | 21.9 | 10.9 | 3.1 | 0.4 |
| 2 | 1.3 | 22.7 | 27.3 | 27.3 | 16.4 | 5.5 | 0.8 |
| 3 | 1.5 | 10.9 | 23.4 | 31.3 | 23.4 | 9.4 | 1.6 |
| 4 | 1.9 | 3.1 | 15.6 | 31.3 | 31.3 | 15.6 | 3.1 |
| 5 | 2.4 | 0.0 | 6.3 | 25.0 | 37.5 | 25.0 | 6.3 |
| 6 | 3.0 | 0.0 | 0.0 | 12.5 | 37.5 | 37.5 | 12.5 |
| 7 | 3.7 | 0.0 | 0.0 | 0.0 | 25.0 | 50.0 | 25.0 |
| 8 | 4.6 | 0.0 | 0.0 | 0.0 | 0.0 | 50.0 | 50.0 |

As shown in FIG. 5, a treatment tank with an inner diameter R of 154 mm and a taper angle θ of 90° at the bottom when viewed from the front was used. A pitched paddle type stirring blade with four blade plates inclined at 45° from the horizontal plane was used for stirring the treated liquid. The diameter r of the stirring blade (the distance r between the tips of the blade plates passing through the center of rotation) was 75 mm, and the distance between the upper end and the lower end of each blade plate was 10 mm. This stirring blade was placed at the center of the treatment tank, with the distance d from the upper end of the taper to the upper end of each blade plate being 45 mm.

A flocculation state monitoring sensor (S. sensing CS-P manufactured by Kurita Water Industries Ltd.) was placed above the stirring blade, and 3 L of the treated liquid was supplied to the treatment tank. The diameter of the measurement region of the probe provided in the flocculation state monitoring sensor was 1 mm. Then, with a stirring speed of 300 rpm and an analysis time of 3 minutes, the light reception intensity was measured, and the large peak occurrence rate for each particle diameter of the artificial particles was calculated. The duty ratio of the irradiated laser light was set to 10% (light emission time 200 mSec, pause time 1800 mSec). The above test was conducted for each simulated treated liquid of condition Nos. 1 to 8.

The coefficient of determination $R^2$ showing the correlation between each change index and particle diameter was calculated using the statistical values expressed by calculation formulas [1] to [6] shown in Table 3 as change indexes. In each calculation formula shown in Table 3, $S_i$ is substituted with the integral value of the light reception intensity in the i-th floc formation state measurement time domain. $S_\alpha$ is the reference point for calculating each change index, and $S_\alpha$ is substituted with the average value of the integral values of the light reception intensity in the floc formation state measurement time domain when the light reception intensity is obtained n times in the floc formation state measurement time domain, the minimum value of the integral values of the light reception intensity in the floc formation state measurement time domain when the light reception intensity is obtained n times in the floc formation state measurement time domain, each percentile of the integral values of the light reception intensity in the floc formation state measurement time domain when the light reception intensity is obtained n times in the floc formation state measurement time domain, or the maximum value of the integral values of the light reception intensity in the floc formation state measurement time domain. Table 3 shows the coefficient of determination $R^2$ calculated by substituting different $S_\alpha$ in calculation formulas [1] to [6].

[Table 3]

| Calculation formula / α | [1] $\dfrac{\frac{1}{n}\sum_{i=1}^{n}\left|S_i - S_\alpha\right|}{S_\alpha}$ | [2] $\dfrac{\frac{1}{n-1}\sum_{i=1}^{n}\left|S_i - S_\alpha\right|}{S_\alpha}$ | [3] $\dfrac{1}{n}\sum_{i=1}^{n}\left|S_i - S_\alpha\right|$ | [4] $\dfrac{\sqrt{\frac{1}{n}\sum_{i=1}^{n}\left(S_i - S_\alpha\right)^2}}{S_\alpha}$ | [5] $\dfrac{\sqrt{\frac{1}{n-1}\sum_{i=1}^{n}\left(S_i - S_\alpha\right)^2}}{S_\alpha}$ | [6] $\sqrt{\frac{1}{n}\sum_{i=1}^{n}\left(S_i - S_\alpha\right)^2}$ |
|---|---|---|---|---|---|---|
| ave (average) | 0.97 | 0.97 | 0.97 | 0.96 | 0.96 | 0.96 |
| min (minimum) | 0.95 | 0.95 | 0.75 | 0.95 | 0.95 | 0.83 |
| 5 percentile | 0.96 | 0.96 | 0.82 | 0.96 | 0.96 | 0.93 |
| 10 percentile | 0.98 | 0.98 | 0.96 | 0.98 | 0.98 | 0.95 |
| 15 percentile | 0.96 | 0.96 | 0.89 | 0.95 | 0.95 | 0.89 |
| 20 percentile | 0.98 | 0.98 | 0.94 | 0.97 | 0.97 | 0.94 |
| 25 percentile | 0.97 | 0.97 | 0.94 | 0.96 | 0.96 | 0.93 |
| 30 percentile | 0.98 | 0.98 | 0.91 | 0.98 | 0.98 | 0.93 |
| 35 percentile | 0.98 | 0.98 | 0.96 | 0.95 | 0.95 | 0.95 |
| 40 percentile | 0.98 | 0.98 | 0.97 | 0.96 | 0.96 | 0.96 |
| 45 percentile | 0.94 | 0.94 | 0.98 | 0.92 | 0.92 | 0.95 |
| 50 percentile | 0.93 | 0.93 | 0.98 | 0.92 | 0.92 | 0.95 |
| 55 percentile | 0.94 | 0.94 | 0.98 | 0.94 | 0.94 | 0.96 |
| 60 percentile | 0.94 | 0.94 | 0.97 | 0.95 | 0.95 | 0.96 |
| 65 percentile | 0.94 | 0.94 | 0.96 | 0.96 | 0.96 | 0.97 |
| 70 percentile | 0.94 | 0.94 | 0.94 | 0.96 | 0.96 | 0.97 |
| 75 percentile | 0.93 | 0.93 | 0.90 | 0.95 | 0.95 | 0.95 |
| 80 percentile | 0.95 | 0.95 | 0.93 | 0.97 | 0.97 | 0.96 |
| 85 percentile | 0.94 | 0.94 | 0.90 | 0.96 | 0.96 | 0.94 |
| 90 percentile | 0.93 | 0.93 | 0.87 | 0.95 | 0.95 | 0.91 |
| 95 percentile | 0.88 | 0.88 | 0.77 | 0.90 | 0.90 | 0.80 |
| max (maximum) | 0.80 | 0.80 | 0.60 | 0.84 | 0.84 | 0.67 |

In the test conditions conducted in Example 1, as shown in Table 3, in the case where $S_{min}$, which is the minimum value of the integral values of the light reception intensity in the floc formation state measurement time domain when the light reception intensity is obtained n times in the floc formation state measurement time domain, was substituted for $S_\alpha$ in calculation formula [3] (min in Table 4), the coefficient of determination $R^2$ was less than 0.80, and the correlation was lower compared to other cases. Further, in the case where $S_{95percentile}$, which is the 95 percentile of the integral values of the light reception intensity in the floc formation state measurement time domain when the light reception intensity is obtained n times in the floc formation state measurement time domain, was substituted for $S_\alpha$ in calculation formula [3], the coefficient of determination $R^2$ was less than 0.80, and the correlation was lower compared to other cases. Furthermore, in the case where $S_{max}$, which is the maximum value of the integral values of the light reception intensity in the floc formation state measurement time domain when the light reception intensity is obtained n times in the floc formation state measurement time domain, was substituted for $S_\alpha$ in calculation formula [3], the coefficient of determination $R^2$ was less than 0.80, and the correlation was lower compared to other cases. Additionally, in the case where $S_{max}$, which is the maximum value of the integral values of the light reception intensity in the floc formation state measurement time domain when the light reception intensity is obtained n times in the floc formation state measurement time domain, was substituted for $S_\alpha$ in calculation formula [6], the coefficient of determination $R^2$ was less than 0.80, and the correlation was lower compared to other cases. However, in cases other than those mentioned above, calculation formulas [1] to [6] generally showed good relationships ($R^2 \geq 0.80$). That is, it was found that by appropriately selecting the change index and the reference point $S_\alpha$ for calculating the change index, the flocculation state of particles in the treated liquid can be determined over a wide range of particle diameters.

Since the flocculation sensor performs analysis of sample data through intermittent measurement, and uses an easy-to-understand calculation using arithmetic mean values without the need for percentile analysis, it is preferable to use the change index that applies $S_{ave}$ as the reference point $S_\alpha$ in calculation formula [2] and calculation formula [5] in Table 3. Among the change indexes that apply $S_{ave}$ as the reference point $S_\alpha$ in calculation formula [2] and calculation formula [5] in Table 3, a higher correlation was obtained when using the change index that applies $S_{ave}$ as the reference point $S_\alpha$ in calculation formula [2]. Therefore, it was found that it is more preferable to use the change index that applies $S_{ave}$ as the reference point $S_\alpha$ in calculation formula [2]. However, if the coefficient of determination $R^2$ is 0.80 or more, the flocculation state of particles in the treated liquid can be determined over a wide range of particle diameters using any of the statistical values shown in Table 3. Furthermore, if the coefficient of determination $R^2$ is 0.80 or more, statistical values obtained by multiplying arbitrary coefficients to the above calculation formulas [1] to [6], statistical values calculated without division by the average or median value, or statistical values obtained by multiplying at least one of the numerator and denominator by its value may also be used.

<Example 2>

A treated liquid with a suspended solids (SS) content of 0.8% was supplied to the treatment tank at a supply rate of 23 m$^3$/h, and the flocculant was continuously added to the treated liquid in the treatment tank. A combination of inorganic flocculant and polymeric flocculant was used as the flocculant. Poly ferric sulfate was used as the inorganic flocculant, with a concentration of 1432 mg/L and an addition rate of 18.2%/SS relative to the suspended solids content. The addition rate of the inorganic flocculant was defined as the ratio of the dry weight of the inorganic flocculant to the weight of suspended solids (unit: %/SS). For the polymeric flocculant, an amphoteric polymeric flocculant was used, which was a copolymer composed of 2-(methacryloyloxy)ethyl(trimethyl)ammonium chloride, 2-(acryloyloxy)ethyl(trimethyl)ammonium chloride, acrylic acid, and acrylamide as constituent units. It should be noted that 2-(methacryloyloxy)ethyl(trimethyl)ammonium chloride and 2-(acryloyloxy)ethyl(trimethyl)ammonium chloride are cationic monomers, acrylic acid is an anionic monomer, and acrylamide is a non-ionic monomer. The chemical dosing output of the polymeric flocculant was intentionally varied.

The light reception intensity was continuously measured using a flocculation state monitoring sensor (S. sensing CS-P manufactured by Kurita Water Industries Ltd.), and the light reception amount change index $CI_{(3)}$ was calculated.

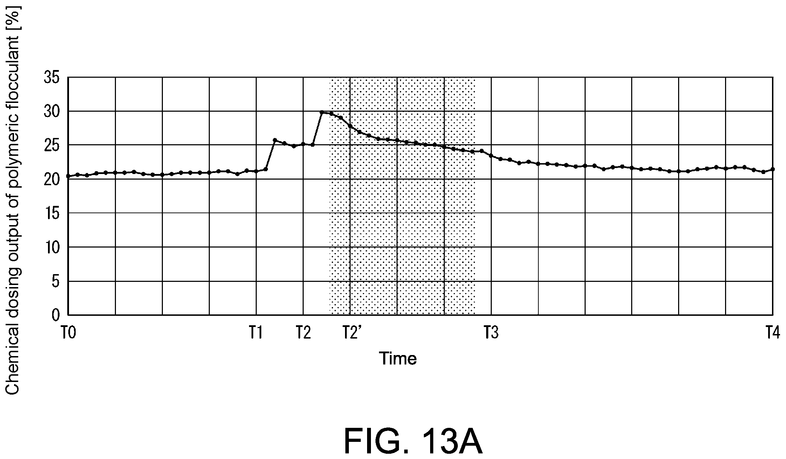

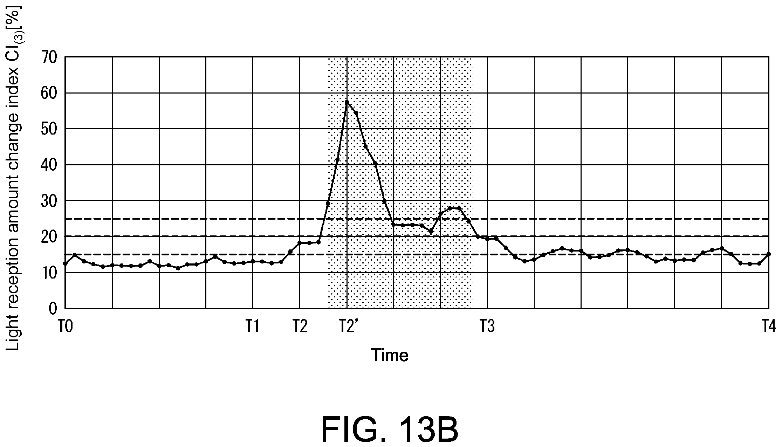

FIG. 13A shows the time-dependent change of the chemical dosing output of the polymeric flocculant, and FIG. 13B shows the time-dependent change of the light reception amount change index $CI_{(3)}$.

From time T0 to time T1, as shown in FIG. 13B, the chemical dosing output of the polymeric flocculant was controlled to maintain the light reception amount change index $CI_{(3)}$ at 15%. At time T1 and time T2, the chemical dosing output of the polymeric flocculant was set to 26% and 30%, respectively. As shown in FIG. 13A, there was a time lag between the time points when the chemical dosing output was changed at time T1 and time T2 and when the actual chemical dosing changed. From the time point when the light reception amount change index $CI_{(3)}$ reached 25%, PID control was used to decrease the chemical dosing output of the polymeric flocculant, and thereafter, as shown in FIG. 13B, from time T3 when the light reception amount change index $CI_{(3)}$ became 20%, the chemical dosing output of the polymeric flocculant was controlled to maintain the light reception amount change index $CI_{(3)}$ at 15%. The light reception amount change index $CI_{(3)}$ of 25% corresponds to the upper limit of the appropriate range for particle diameter and is equivalent to the aforementioned second threshold. Additionally, the light reception amount change index $CI_{(3)}$ of 20% corresponds to the aforementioned third threshold.

Additionally, at 3 minutes after each time point of time T0, time T2, time T2', and time T4 shown in FIG. 13A and FIG. 13B, the treated liquid was sampled, and a Nutsche test was performed using the sampled liquid to measure the particle diameter. Furthermore, at 15 minutes after each time point of time T0, time T2, and time T4, the treated liquid was dewatered using dewatering equipment, and the suspended solid concentration in the filtrate after dewatering and the water content of the dewatered cake were measured.

The particle diameter was measured visually. Specifically, the particle diameter was measured by comparing multiple figures representing particles of different particle diameters shown in a standard chart indicating particle diameters with the particles obtained from the Nutsche test.

The suspended solid concentration in the filtrate was measured in accordance with "14.2 Suspended Solids" in JIS K 0102:2021.

The water content of the dewatered cake was measured by the method described in Section 6, Chapter 1, Part 5 of the Sewage Testing Methods (2012 edition).

As shown in FIG. 13A and FIG. 13B, it was found that the chemical dosing output of the polymeric flocculant can be controlled with the light reception amount change index $CI_{(3)}$.

Table 4 shows the particle diameter, suspended solid concentration in the filtrate, and water content of the dewatered cake. In Table 4, the particle diameters at T0, T2, T2', and T4 indicate the particle diameters of the particles in the treated liquid 3 minutes after each time point of time T0, time T2, time T2', and time T4. Additionally, the suspended solid concentration in the filtrate and the water content of the dewatered cake at T0, T2, T2', and T4 in Table 2 show the measurement results for the samples taken 15 minutes after each time point of time T0, time T2, time T2', and time T4.

[Table 4]

| Time | Particle diameter (mm) | Suspended solid concentration in filtrate [mg/L] | Dewatered cake water content [%] |
|---|---|---|---|
| T0 | 0.50 to 1.00 | 1480 | 83.7 |
| T2 | 0.75 to 1.00 | - | - |
| T2' | 1.00 to 2.25 | 310 | 84.6 |
| T4 | 0.50 to 1.00 | 300 | 84.3 |

At the time points of time T0, time T2, and time T4, the light reception amount change index $CI_{(3)}$ is equal to or less than the second threshold of 25%. As shown in Table 4, if the light reception amount change index $CI_{(3)}$ is equal to or less than the second threshold, the particle diameter is 1.00 mm or less, making it possible to reduce the suspended solid concentration in the filtrate after dewatering while also achieving a low water content in the dewatered cake. Therefore, it was found that the addition amount of the flocculant can be controlled using the light reception amount change index $CI_{(3)}$, and the particle diameter can be adjusted to the desired value. Furthermore, it was found that by using the light reception amount change index $CI_{(3)}$, it is possible to prevent an increase in the water content of the dewatered cake and suppress the leakage of particles into the filtrate.

In addition, by disabling the PID control at the third threshold (light reception amount change index $CI_{(3)}$ of 20%), the chemical dosage did not become insufficient, and the addition of the flocculant continued at an addition rate that resulted in an appropriate particle diameter.

The above examples illustrate cases of setting the second threshold which is the upper limit of the appropriate range for particle diameter. Nevertheless, it is clear that in the case of setting the first threshold which is the lower limit of the appropriate range for particle diameter, it is possible to prevent the particle diameter from becoming too small, and to prevent an increase in the water content of the dewatered cake, as well as to suppress the leakage of particles into the filtrate.

Reference Signs List

    3 treatment tank
    4 chemical dosing device
    8 controller
    10 flocculation state monitoring sensor

**Claims**

1. A flocculation state determination method, being a method for irradiating laser light into a liquid containing particles and determining a flocculation state of the particles based on a light reception intensity of scattered light that results from the laser light being scattered by the particles, the flocculation state determination method comprising:
determining the flocculation state of the particles based on a change index that represents a change in the light reception intensity.

2. The flocculation state determination method according to claim 1, wherein the change index is a light reception amount change index CI expressed by formula (1),
[Formula 1]

$$CI = \frac{\frac{1}{n-1}\sum_{i=1}^{n}|S_i - S_{ave}|}{S_{ave}} \qquad \cdots formula\ (1)$$

in the formula (1),

$S_i$: Integral value of the light reception intensity in an i-th floc formation state measurement time domain,
$S_{ave}$: Average value of integral values of the light reception intensity in the floc formation state measurement time domain when the light reception intensity is obtained n times in the floc formation state measurement time domain.

3. The flocculation state determination method according to claim 1 or 2, comprising: determining the flocculation state to be good in a case where the change index is equal to or greater than a first threshold and is equal to or less than a second threshold, which is a value greater than the first threshold.

4. The flocculation state determination method according to claim 1 or 2, comprising: determining the flocculation state of the particles based on a relationship between a particle diameter of the particles and a change range of the light reception intensity, in addition to the change index.

5. The flocculation state determination method according to claim 1 or 2, comprising: obtaining in advance a relationship between the change index and a particle diameter, and performing determination based on the change index in a particle diameter range decided based on the relationship.

6. A flocculation treatment method for adding a flocculant into a liquid containing particles and flocculating the particles, the flocculation treatment method comprising:

a determination process of irradiating laser light into the liquid and determining a flocculation state of the particles based on a change index that represents a change in a light reception intensity of scattered light that results from the laser light being scattered by the particles; and
a flocculant addition process of adding the flocculant in an addition amount based on the flocculation state of the particles determined in the determination process.

7. The flocculation treatment method according to claim 6, wherein the change index is a light reception amount change index value CI expressed by formula (2),
[Formula 2]

$$CI = \frac{\frac{1}{n-1}\sum_{i=1}^{n}|S_i - S_{ave}|}{S_{ave}} \qquad \cdots formula\ (2)$$

in the formula (2),

$S_i$: Integral value of the light reception intensity in an i-th floc formation state measurement time domain,
$S_{ave}$: Average value of integral values of the light reception intensity in the floc formation state measurement time domain when the light reception intensity is obtained n times in the floc formation state measurement time domain.

8. The flocculation treatment method according to claim 6 or 7, comprising: increasing the addition amount of the flocculant in a case where the change index is less than a first threshold, and decreasing the addition amount of the flocculant in a case where the change index exceeds a second threshold, which is a value greater than the first threshold.

9. The flocculation treatment method according to claim 8, comprising: stopping decreasing the addition amount of the flocculant when the change index reaches a third threshold, which is a value greater than the first threshold and less than the second threshold, after exceeding the second threshold.

# FIG. 1

FIG. 2

# FIG. 3

# FIG. 4A

FIG. 4B

FIG. 5

FIG. 6

EP 4 560 289 A1

| Particle diameter | Small | Medium | Large |
|---|---|---|---|
| Measurement situation | Light-emitting part / Laser light / Light-receiving part / Scattered light / Measurement region / Particle | | |
| Detection waveform | | | |

FIG. 7

| Particle diameter | Small | Medium | Large |
|---|---|---|---|
| Measurement situation | | | |
| Detection waveform | | | |

FIG. 8

EP 4 560 289 A1

FIG. 9

## FIG. 10

## FIG. 11

Start

S1

Add flocculant

S2

Is the light reception amount change index $CI_{(3)}$ equal to or greater than the first threshold?

NO

S3

Increase chemical dosage

YES

S4

Is the light reception amount change index $CI_{(3)}$ equal to or less than the second threshold?

NO

S5

Reduce chemical dosage

YES

S6

Is the addition of treated liquid ended?

NO

YES

End

FIG. 12

FIG. 13A

FIG. 13B

## INTERNATIONAL SEARCH REPORT

| International application No. |
|---|
| **PCT/JP2023/024621** |

| **A.** | **CLASSIFICATION OF SUBJECT MATTER** |
|---|---|

*G01N 15/02*(2006.01)i; *B01D 21/01*(2006.01)i; *B01D 21/30*(2006.01)i; *C02F 1/52*(2023.01)i; *C02F 1/56*(2023.01)i;
*G01N 21/49*(2006.01)i
FI: G01N15/02 A; B01D21/01 B; B01D21/30 A; C02F1/52 Z; C02F1/56 Z; G01N21/49 Z

According to International Patent Classification (IPC) or to both national classification and IPC

| **B.** | **FIELDS SEARCHED** |
|---|---|

Minimum documentation searched (classification system followed by classification symbols)

G01N15/02; B01D21/01; B01D21/30; C02F1/52; C02F1/56; G01N21/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2017-26438 A (KURITA WATER IND LTD) 02 February 2017 (2017-02-02) paragraphs [0030]-[0159], fig. 1-15 | 1, 3-6, 8-9 |
| A | paragraphs [0030]-[0159], fig. 1-15 | 2, 7 |
| A | JP 2021-20158 A (KURITA WATER IND LTD) 18 February 2021 (2021-02-18) entire text, all drawings | 1-9 |
| A | JP 2007-121601 A (HITACHI CABLE LTD) 17 May 2007 (2007-05-17) entire text, all drawings | 1-9 |
| A | JP 2007-263856 A (KURITA WATER IND LTD) 11 October 2007 (2007-10-11) entire text, all drawings | 1-9 |
| A | JP 2022-77588 A (NAT INST MATERIALS SCIENCE) 24 May 2022 (2022-05-24) entire text, all drawings | 1-9 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 560 289 A1**

| INTERNATIONAL SEARCH REPORT<br>Information on patent family members | | | International application No.<br>**PCT/JP2023/024621** | |
|---|---|---|---|---|
| Patent document<br>cited in search report | Publication date<br>(day/month/year) | Patent family member(s) | | Publication date<br>(day/month/year) |
| JP 2017-26438 A | 02 February 2017 | US 2018/0201527 A1<br>paragraphs [0042]-[0166], fig.<br>1-15<br>WO 2017/013879 A1 | | |
| JP 2021-20158 A | 18 February 2021 | WO 2021/020125 A1<br>entire text, all drawings | | |
| JP 2007-121601 A | 17 May 2007 | (Family: none) | | |
| JP 2007-263856 A | 11 October 2007 | (Family: none) | | |
| JP 2022-77588 A | 24 May 2022 | (Family: none) | | |

Form PCT/ISA/210 (patent family annex) (January 2015)

**EP 4 560 289 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022116996 A
- JP 2017026438 A

- JP 6281534 B

### Non-patent literature cited in the description

- the Sewage Testing Methods. 2012